# EUROPÄISCHE PATENTSCHRIFT

(11) **EP 2 299 071 B1**
(45) Veröffentlichungstag und Bekanntmachung des Hinweises auf die Patenterteilung: **06.06.2012**
(21) Anmeldenummer: 09178278.9
(22) Anmeldetag: 08.12.2009
(51) Int. Cl.: F01M 13/04, F01L 1/047

(54) **Vorrichtung zur Veränderung einer relativen Drehwinkellage einer Nockenwelle gegenüber einer Kurbelwelle einer Brennkraftmaschine**
Device for changing the phase of a camshaft relative to a crankshaft of a combustion engine
Dispositif de modification d'une position d'angle de rotation relative d'un arbre à came par rapport à un vilebrequin d'un moteur à combustion interne

(30) Priorität: 18.09.2009 DE 102009042228
(43) Veröffentlichungstag der Anmeldung: 23.03.2011
(73) Patentinhaber: Schaeffler Technologies AG & Co. KG, 91074 Herzogenaurach (DE)
(72) Erfinder: Weber, Jürgen, 91058 Erlangen (DE); Ottersbach, Rainer, 91086 Aurachtal (DE); Betz, Christoph, 91093 Untermembach / Hessdorf (DE)

(56) Entgegenhaltungen:
- WO-A1-01/29377
- US-A- 6 026 772
- US-A1- 2009 120 392
- US-A1- 2009 211 549

## Beschreibung

### Gebiet der Erfindung

Die Erfindung betrifft eine Vorrichtung zur Veränderung der relativen Winkellage einer Nockenwelle gegenüber einer Kurbelwelle einer Brennkraftmaschine, wobei die Vorrichtung ein von der Kurbelwelle über ein Zahnrad angetriebenes Antriebselement umfasst, das gegenüber der Nockenwelle drehbar gelagert ist, wobei zwischen dem Antriebselement und der Nockenwelle mindestens zwei Hydraulikkammern ausgebildet sind, die mit einem Druckfluid beaufschlagbar sind, um eine definierte relative Drehstellung zwischen dem Antriebselement und der Nockenwelle einzustellen.

### Hintergrund der Erfindung

Nockenwellenverstellvorrichtungen, insbesondere solche, die hydraulisch arbeiten, sind im Stand der Technik hinlänglich bekannt. Im hydraulischen Nockenwellenversteller ist ein Flügelrad vorhanden, in dem Flügel eingeformt oder angeordnet sind. Die Flügel befinden sich in Hydraulikkammern, die in einem Außenrotor eingearbeitet sind. Durch entsprechende Beaufschlagung der jeweiligen Seite der Hydraulikkammern mit Hydraulikfluid kann eine Verstellung des Innenrotors (mit der Nockenwelle verbunden) relativ zum Außenrotor zwischen einem "Frühanschlag" und einem "Spätanschlag" erfolgen. Dabei wird der Fluss von Hydrauliköl durch ein elektrisch angesteuertes Wegeventil gesteuert.

Die Übertragung der Drehbewegung der Kurbelwelle auf den Außenrotor erfolgt im vorliegenden Falle über ein Zahnrad, mit dem der Außenrotor drehfest verbunden ist. Im Stand der Technik sind Lösungen bekannt, bei denen das Zahnrad als Kettenrad ausgebildet ist und am Außenumfang des Außenrotors angeordnet bzw. mit dem Außenrotor drehfest verbunden ist. Beispiele hierfür sind in der DE 100 54 798 A1**,** in der DE 10 2004 007 050 A1**,** in der DE 10 2004 038 695 A1 und in der DE 10 2004 062 038 A1 offenbart.

Diese Art der axialen Lagerung erfordert einen Stufenanschlag mit einer Durchmesserdifferenz am Außenmantel der Nockenwelle. Die Anfertigung dieses axialen Anschlags an der Nockenwelle ist nachteilig mit zusätzlichen Herstell- bzw. Montageaufwendungen und damit mit entsprechenden Kosten verbunden.

Außerdem können durch diese Konzeption die Kosten- und Gewichtsvorteile verloren gehen, die durch ein durchgängiges Rohr als Grundkörper der Nockenwelle vorliegen. Zur Gestaltung eines axialen Anschlages muss dann die Nockenwelle zusätzlich radial umgeformt oder spanend bearbeitet werden.

Auch eine kraft- oder stoffschlüssige Anbindung eines Anschlagselements in Form einer Hülse ist mit Gewichts- und Kostennachteilen verbunden.

Ferner ist das Zahnrad - als Stirnrad ausgebildet - wegen seines Hinterschnitts zwischen der Stirnseite des Verzahnungskranzes und der äußeren Stirnseite des Dichtdeckels des Verstellers für Schleifprozesse sehr nachteilig: Sollen zur Erzielung einer hinreichenden Verzahnungsqualität die Zahnflanken geschliffen werden, ist der fertigungstechnisch erforderliche Auslauf des Schleifwerkzeugs nicht mehr möglich.

Die US 2009/0120392 A1 offenbart einen Nockenwellenversteller mit einer Nockenwelle und einem Axiallager zwischen Nockenwelle und Zylinderkopf. Die Nockenwelle besitzt dazu zwei beabstandete Auskragungen welche das Axiallager vom Zylinderkopf umschließen und die axiale Position der Nockenwelle zum Zylinderkopf über die ringförmige Anlage zwischen Auskragung und Zylinderkopf festlegen.

### Aufgabe der Erfindung

Der vorliegenden Erfindung liegt die A u fg a b e zugrunde, eine Vorrichtung der eingangs genannten Art so fortzubilden, dass es möglich wird, eine axiale Lagerung der Nockenwelle im bzw. am Nockenwellenversteller so zu realisieren, dass eine gewichts- und kostenoptimale Konzeption vorliegt. Dies soll am bereits mit dem Nockenwellenende verbundenen Nockenwellenversteller erfolgen können. Dabei soll es weiterhin möglich sein, die benötigten Teile und insbesondere die Verzahnung des Zahnrades in hoher Qualität problemlos herstellen zu können.

### Zusammenfassung der Erfindung

Erfindungsgemäß wird diese Aufgabe durch die Merkmale des Anspruchs 1 gelöst.

Das Antriebselement kann mindestens einen stirnseitig angeordneten Deckel aufweisen, wobei das Zahnrad axial an den Deckel angrenzt und mit diesem form- und/oder stoffschlüssig verbunden ist. Zwischen dem Deckel und dem Zahnrad ist besonderes bevorzugt eine Vielkeilverbindung oder Vielzahnverbindung ausgebildet. Die Vielkeilverbindung kann dabei eine Anzahl sich radial nach außen erstreckender Keile oder Zähne aufweisen, die an dem Zahnrad angeordnet sind und die sich in korrespondierende Ausnehmungen im Deckel erstrecken. Die Vielkeilverbindung kann dabei eine axiale Fixierung zwischen Zahnrad und Deckel in Form mindestens einer plastischen Verformung aufweisen, die in die Keile oder Zähne und/oder in die Ausnehmungen eingebracht ist.

Alternativ ist es auch möglich, dass das Zahnrad und der Deckel mittels eines Sprengrings formschlüssig miteinander verbunden sind.

Ferner besteht die Möglichkeit, dass das Zahnrad und der Deckel mittels eines umbördelten Abschnitts des Zahnrads formschlüssig miteinander verbunden sind.

Der Deckel kann mittels einer Schraubverbindung mit dem Antriebselement verbunden sein.

Das Zahnrad weist bevorzugt einen hohlzylindrischen Grundkörper auf. An diesen können axial beiderseits im Durchmesser reduzierte hohlzylindrische Abschnitte angrenzen. Der dem Deckel zugewandte hohlzylindrische Abschnitt kann ferner eine ringnutförmige Eindrehung in seiner Stirnfläche aufweisen.

Der Außendurchmesser des Zahnrads ist bevorzugt kleiner als der Außendurchmesser des Antriebselements.

Die Erfindung stellt also auf das Konzept ab, einen axialen Anschlag für das System Nockenwelle-Nockenwellenversteller zwischen einer Stirnseite eines Dichtdeckels und dem Zylinderkopf des Verbrennungsmotors zu schaffen. Dabei sind das vorzugsweise als Stirnrad ausgebildete Zahnrad und der Dichtdeckel zweiteilig ausgestaltet. Zum Übertragen des Antriebsdrehmoments ist die Verbindung zwischen Dichtdeckel und Zahnrad bevorzugt als Vielzahn-Profil mit Formschluss ausgebildet. Das Zahnspiel dieser Verbindung im Vielzahn-Formschluss kann durch eine axiale plastische Verformung des Formschlussprofils am Zahnrad im bereits zusammengefügten Formverbund herausgenommen werden.

Der am Nockenwellenende form-, kraft- oder stoffschlüssig befestige Nockenwellenversteller stellt dabei eine axiale Lagerung der Nockenwelle am Zylinderkopf dar. Als axialer Anschlag dient die vom Nockenwellenversteller abgewandte Stirnseite des Stirnrads.

Das Stirnrad kann als Einzelteil in hoher Fertigungsqualität durch Umformen, Abtragen, Blechpaketieren, Schmieden, Gießen, Sintern, Verdichten, Härten, Schleifen bzw. in ähnlicher Weise hergestellt werden.

Der Dichtdeckel stellt ein ringartiges Bauteil mit Schraubenbohrungen oder Gewindezügen zum Herstellen eines Schraubenverbunds mit dem Stator des Nockenwellenverstellers dar. Der Deckel kann durch Umformen, Stanzen, Abtragen, Schmieden, Gießen, Sintern, Schleifen, Drehen bzw. in ähnlicher Weise hergestellt werden.

Das als Stirnrad ausgeführte Zahnrad kann an seiner einen Stirnseite mit einer verzahnten Nabe versehen sein, wobei diese Verzahnung in ein korrespondierendes Profil am Innendurchmesser des Dichtdeckels radial eingreift und so einen Formschluss zwischen dem Zahnrad (Stirnrad) und dem Dichtdeckel zur Übertragung des Antriebsmoments vom Stirnrad zum Stator des Nockenwellenverstellers herstellt.

Nach dem axialen Fügen der beiden verzahnten Bauteile Zahnrad und Dichtdeckel können Fertigungstoleranzen, die zu einem Spiel in der Verzahnung führen, dadurch eliminiert werden, dass eine plastische Verformung an der zusammenwirkenden Verzahnung bzw. Ausnehmung vorgenommen wird. Dies kann mit einem speziellen Werkzeug erfolgen. Hierdurch wird ein spielfreier Formschluss zwischen dem Stirnrad und dem Dichtdeckel gewährleistet.

Möglich ist es auch, dass das Zahnspiel durch eine radiale Aufweitung am Innendurchmesser der verzahnten Nabe erfolgt, was mit einem Spreizwerkzeug erfolgen kann. Möglich ist hierbei auch der Einsatz einer eingepressten Aufweitungshülse.

Der genannte Formschluss kann auch stirnseitig zwischen dem Nabenabschnitt des Zahnrads und dem Dichtdeckel gestaltet werden. Dabei wird das Stirnrad in den Dichtdeckel axial gefügt, bis die stirnseitige Verzahnung an der Nabe in die stirnseitige Gegenverzahnung im Dichtdeckel spielfrei axial eingreift. Dabei wird das Stirnrad durch eine zusätzliche Zentrierung der Nabe zum Innendurchmesser des Dichtdeckels geführt und durch einen Querpressverband in axialer Richtung in dieser Zentrierung fixiert. Es ist hierbei auch eine zusätzliche Sicherung gegen Mirkowandern durch Kleben möglich.

Durch die Einführung der axialen Lagerung der Nockenwelle am Stirnrad bzw. am Dichtdeckel des Nockenwellenverstellers und vorzugsweise durch die zweiteilige Ausführung von Stirnrad und Dichtdeckel sowie durch die Formschluss-Verbindung zwischen Stirnrad und Dichtdeckel können das Gewicht und die Kosten des Systems Nockenwelle-Nockenwellenversteller reduziert werden und hohe Qualitätsanforderungen an die Verzahnung des Zahnrads erfüllt werden.

### Kurze Beschreibung der Figuren

In den Zeichnungen sind Ausführungsbeispiele der Erfindung dargestellt. Es zeigen:
- Fig. 1: den Radialschnitt durch eine Vorrichtung zur Veränderung der relati- ven Winkellage einer Nockenwelle gegenüber einer Kurbelwelle ei- ner Brennkraftmaschine, also eines Nockenwellenverstellers,
- Fig. 2: den Radialschnitt durch einen Deckel des Nockenwellenverstellers, der mit einem Zahnrad des Nockenwellenverstellers verbunden ist,
- Fig. 3: den Deckel des Nockenwellenverstellers samt Zahnrad in der An- sicht "C" gemäß Fig. 2,
- Fig. 4: den Deckel des Nockenwellenverstellers samt Zahnrad in der An- sicht "D" gemäß Fig. 2,
- Fig. 5: den Deckel des Nockenwellenverstellers samt Zahnrad gemäß Fig. 2 in perspektivischer Ansicht,
- Fig. 6: den Deckel des Nockenwellenverstellers samt Zahnrad gemäß Fig. 2 in perspektivischer Ansicht, wobei die Betrachtungsrichtung im Ver- gleich mit Fig. 5 verändert ist, und
- Fig. 7: den Radialschnitt durch den Deckel des Nockenwellenverstellers samt Zahnrad in einer alternativen Ausgestaltung der Erfindung.

### Ausführliche Beschreibung der Figuren

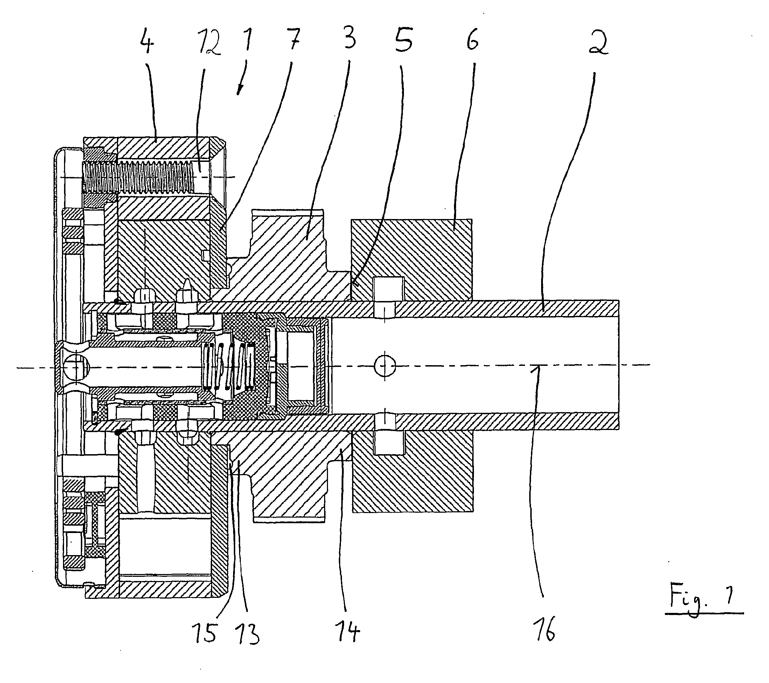

In Fig. 1 ist eine Vorrichtung 1 (Nockenwellenversteller) zur Veränderung der relativen Winkellage einer Nockenwelle 2 gegenüber einer (nicht dargestellten) Kurbelwelle einer Brennkraftmaschine dargestellt. Die Nockenwelle 2 dreht um eine Drehachse 16. Wesentlicher Bestandteil der Vorrichtung ist ein Antriebselement 4, in das eine hydraulische Verstelleinrichtung inkorporiert ist, die zwischen einem äußeren Ringteil (Stator) und der Nockenwelle 2 (Rotor) eine Winkelverdrehung bewerkstelligen kann, um in bekannter Weise die Steuerzeiten der Brennkraftmaschine zu beeinflussen.

Hierzu sind paarweise (nicht näher zu erkennende) Hydraulikkammern zwischen dem Antriebselement 4 und der Nockenwelle 2 wirksam angeordnet, die mit Druckfluid beaufschlagt werden können, um die genannte Verdrehung einstellen zu können. Von diesen Paaren von Hydraulikkammern sind über den Umfang mehrere vorhanden.

Das Antriebselement 4 ist dabei drehfest mit der Kurbelwelle gekoppelt. Diese Drehkopplung wird durch ein Zahnrad 3 hergestellt, das vorliegend als Stirnrad ausgeführt ist und drehfest mit dem Stator verbunden ist. Genauer gesagt, ist das Stirnrad 3 mit einem Deckel 7 drehfest verbunden; der Deckel 7 ist über eine Schraubverbindung 12 mit dem Stator befestigt. Das Stirnrad 3 trägt an seinem Außenumfang eine Verzahnung, die - was nicht dargestellt ist - mit einem Gegenzahnrad in Eingriff ist, das mit der Kurbelwelle drehfest verbunden ist. Demgemäß wird die Drehbewegung der Kurbelwelle über das Zahnrad 3 und den Deckel 7 auf das Antriebselement 4 (Stator) übertragen.

Wesentlich ist, dass das Zahnrad 3 an seiner vom Nockenwellenversteller 1 abgewandten Stirnseite eine Lagerfläche 5 für den axialen Anlauf der Nockenwelle 2 oder eines mit dieser drehfest verbundenen Bauteils 6 bildet. Vorliegend ist die Nockenwelle 2 mit einem Bauteil 6 fest verbunden, so dass das Bauteil 6 an der Lagerfläche 5 anlaufen kann, womit für die Nockenwelle 2 eine axiale Lagerung am Nockenwellenversteller 1 geschaffen ist.

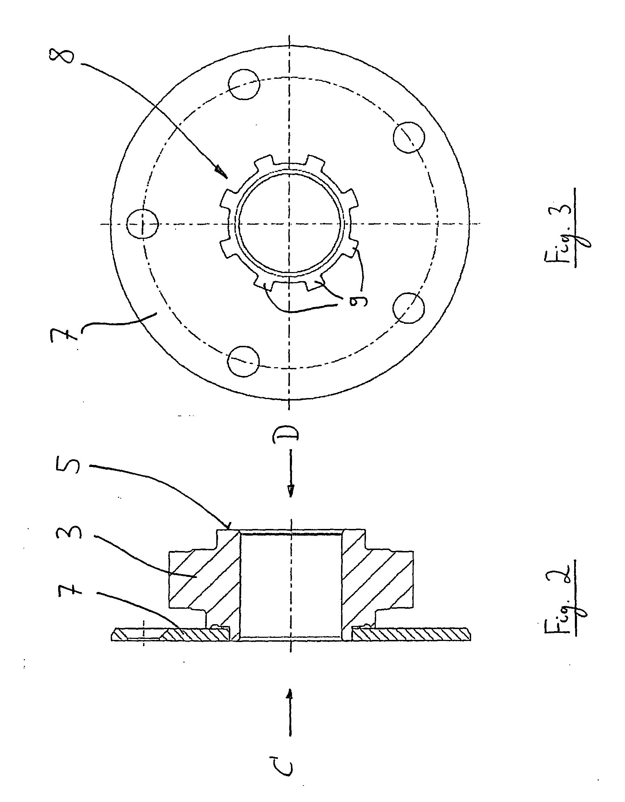

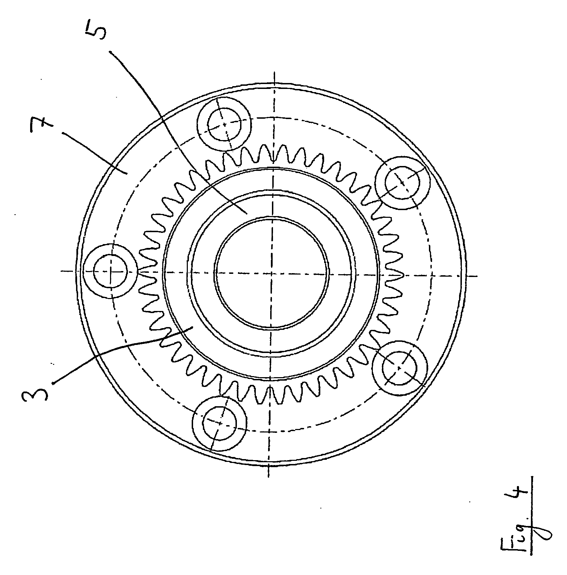

Wesentlich ist weiterhin, dass zwischen dem Zahnrad 3 und dem Deckel 7 ein Antriebsdrehmoment für das Antriebselement 4 übertragen werden kann. Wie den weiteren Figuren 2 bis 6 entnommen werden kann, ist bei dem dort skizzierten Ausführungsbeispiel vorgesehen, dass das Zahnrad 3 aus einem hohlzylindrischen Grundkörper besteht, an den in beiden axialen Endbereichen hohlzylindrische Abschnitte 13 bzw. 14 angrenzen (s. Fig. 1). Eine definierte axiale Anlagefläche des Zahnrads 3 am Deckel 7 wird vorliegend dadurch geschaffen, dass in die am Deckel 7 anliegende Stirnseite des hohlzylindrischen Abschnitts 13 eine ringnutartige Eindrehung 15 eingearbeitet ist.

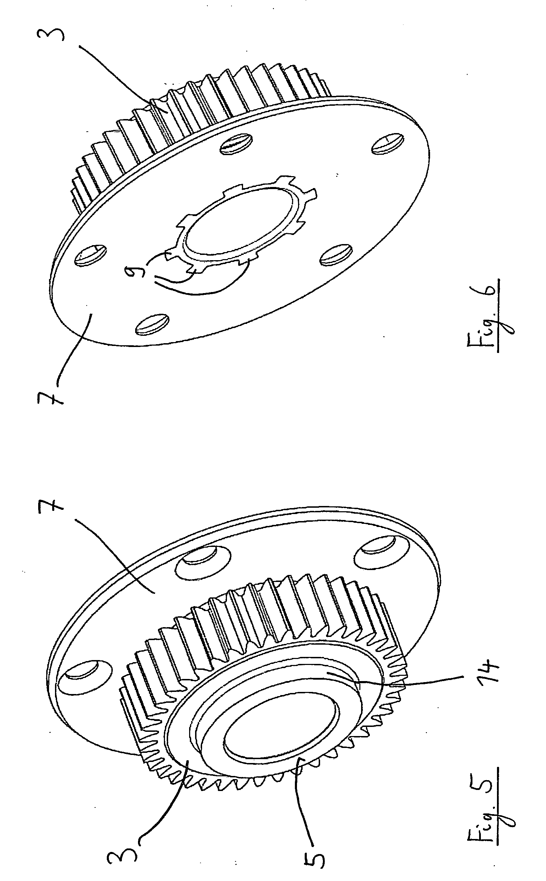

Unter Bezugnahme auf die Figuren 2 bis 6 ist zu sehen, dass die Drehmomentübertragung zwischen dem Zahnrad 3 und dem Deckel 7 durch eine Vielkeilverbindung 8 erfolgt. Hiernach weist der hohlzylindrische Abschnitt 13 in seinem axialen Endbereich sich radial nach außen erstreckende Keile 9 auf, die in korrespondierende Ausnehmungen im Deckel 7 formschlüssig eingreifen (s. Fig. 3 und Fig. 6).

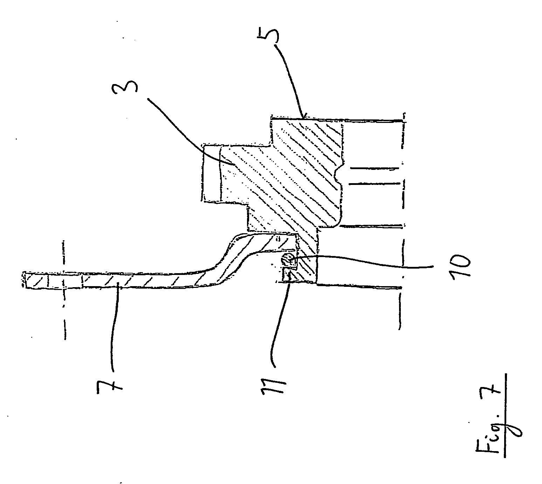

Eine alternative Befestigungsmöglichkeit zwischen Zahnrad 3 und Deckel 7 ist in Fig. 7 skizziert. Hier kommt ein Sprengring 10 zum Einsatz, der in einer ringnutartigen Ausnehmung angeordnet ist, die durch einen umbördelten Abschnitt 11 gebildet wird.

Damit kann in einfacher und kostengünstiger Weise ein Nockenwellenversteller mit einem Axiallager für die Nockenwelle zwischen dem Stirnrad 3 und dem Zylinderkopf realisiert werden.

### Bezugszeichenliste

- 1: Vorrichtung (Nockenwellenversteller)
- 2: Nockenwelle
- 3: Zahnrad
- 4: Antriebselement
- 5: Lagerfläche
- 6: verbundenes Bauteil
- 7: Deckel
- 8: Vielkeilverbindung / Vielzahnverbindung
- 9: Keile / Zähne
- 10: Sprengring
- 11: umbördelter Abschnitt
- 12: Schraubverbindung
- 13: hohlzylindrischer Abschnitt
- 14: hohlzylindrischer Abschnitt
- 15: Eindrehung
- 16: Drehachse

## Patentansprüche

1. Vorrichtung (1) zur Veränderung der relativen Winkellage einer Nockenwelle (2) gegenüber einer Kurbelwelle einer Brennkraftmaschine, wobei die Vorrichtung (1) ein von der Kurbelwelle über ein Zahnrad (3) angetriebenes Antriebselement (4) umfasst, das gegenüber der Nockenwelle (2) drehbar gelagert ist, wobei zwischen dem Antriebselement (4) und der Nockenwelle (2) mindestens zwei Hydraulikkammern ausgebildet sind, die mit einem Druckfluid beaufschlagbar sind, um eine definierte relative Drehstellung zwischen dem Antriebselement (4) und der Nockenwelle (2) einzustellen, **dadurch gekennzeichnet, dass** die axiale Lagerung der Nockenwelle (2) am Zylinderkopf durch eine Stirnseite des als außenverzahntes Stirnrad ausgebildeten Zahnrades (3) ausgebildet ist.

2. Vorrichtung nach Anspruch 1, **dadurch gekennzeichnet, dass** das Antriebselement (4) mindestens einen stirnseitig angeordneten Deckel (7) aufweist, wobei das Zahnrad (3) axial an den Deckel (7) angrenzt und mit diesem form- oder stoffschlüssig verbunden ist.

3. Vorrichtung nach Anspruch 2, **dadurch gekennzeichnet, dass** zwischen dem Deckel (7) und dem Zahnrad (3) eine Vielkeilverbindung (8) oder Vielzahnverbindung ausgebildet ist.

4. Vorrichtung nach Anspruch 3, **dadurch gekennzeichnet, dass** die Vielkeilverbindung (8) eine Anzahl sich radial nach außen erstreckender Keile (9) oder Zähne aufweist, die an dem Zahnrad (3) angeordnet sind und die sich in korrespondierende Ausnehmungen im Deckel (7) erstrecken.

5. Vorrichtung nach Anspruch 4, **dadurch gekennzeichnet, dass** die Vielkeilverbindung (8) eine axiale Fixierung zwischen Zahnrad (3) und Deckel (7) in Form mindestens einer plastischen Verformung aufweist, die in die Keile (9) oder Zähne und/oder in die Ausnehmungen eingebracht ist.

6. Vorrichtung nach Anspruch 2, **dadurch gekennzeichnet, dass** das Zahnrad (3) und der Deckel (7) mittels eines Sprengrings (10) formschlüssig miteinander verbunden sind.

7. Vorrichtung nach Anspruch 2, **dadurch gekennzeichnet, dass** das Zahnrad (3) und der Deckel (7) mittels eines umbördelten Abschnitts (11) des Zahnrads (3) formschlüssig miteinander verbunden sind.

8. Vorrichtung nach Anspruch 2, **dadurch gekennzeichnet, dass** der Deckel (7) mittels einer Schraubverbindung (12) mit dem Antriebselement (4) verbunden ist.

9. Vorrichtung nach Anspruch 1, **dadurch gekennzeichnet, dass** das Zahnrad (3) einen hohlzylindrischen Grundkörper aufweist.

10. Vorrichtung nach Anspruch 9, **dadurch gekennzeichnet, dass** an den hohlzylindrischen Grundkörper axial beiderseits im Durchmesser reduzierte hohlzylindrische Abschnitte (13, 14) angrenzen.

11. Vorrichtung nach Anspruch 10, **dadurch gekennzeichnet, dass** der einem Deckel (7) zugewandte hohlzylindrische Abschnitt (13) eine ringnutförmige Eindrehung (15) in seiner Stirnfläche aufweist.

12. Vorrichtung nach Anspruch 1, **dadurch gekennzeichnet, dass** der Außendurchmesser des Zahnrads (3) kleiner ist als der Außendurchmesser des Antriebselements (4).

## Claims

1. Device (1) for varying the angular position of a camshaft (2) relative to a crankshaft of an internal combustion engine, the device (1) comprising a drive element (4), which is driven by the crankshaft via a gearwheel (3) and which is supported so that it can rotate in reflation to the camshaft (2), at least two hydraulic chambers, to which a hydraulic fluid can be admitted in order to set a defined relative rotational position between the drive element (4) and the camshaft (2), being formed between the drive element (4) and the camshaft (2), **characterized in that** the axial support of the camshaft (2) on the cylinder head is formed by an end face of the gearwheel (3) which is embodied as an externally toothed spur gear.

2. Device according to Claim 1, **characterized in that** the drive element (4) has at least one cover (7) arranged on the end face, the gearwheel (3) axially adjoining the cover (7) and being connected to the latter positively and/or by cohesive material attachment.

3. Device according to Claim 2, **characterized in that** a multiple-splined connection (8) or multiple-toothed connection is formed between the cover (7) and the gearwheel (3).

4. Device according to Claim 3, **characterized in that** the multiple-splined connection (8) has a number of splines (9) or teeth extending radially outwards, which are arranged on the gearwheel (3) and which extend into corresponding recesses in the cover (7).

5. Device according to Claim 4, **characterized in that** the multiple-splined connection (8) has an axial fixing between the gearwheel (3) and the cover (7) in the form of at least one plastic deformation, which is introduced into the splines (9) or teeth and/or into the recesses.

6. Device according to Claim 2, **characterized in that** the gearwheel (3) and the cover (7) are positively connected to one another by means of a snap ring (10).

7. Device according to Claim 2, **characterized in that** the gearwheel (3) and the cover (7) are positively connected to one another by means of a flanged section (11) of the gearwheel (3).

8. Device according to Claim 2, **characterized in that** the cover (7) is connected to the drive element (4) by means of a screwed connection (12).

9. Device according to Claim 1, **characterized in that** the gearwheel (3) has a hollow cylindrical body.

10. Device according to Claim 9, **characterized in that** hollow cylindrical sections (13, 14) of reduced diameter adjoin the hollow cylindrical body axially on both sides.

11. Device according to Claim 10, **characterized in that** the hollow cylindrical section (13) facing a cover (7) has an annular groove-shaped necking (15) in its end face.

12. Device according to Claim 1, **characterized in that** the outside diameter of the gearwheel (3) is smaller than the outside diameter of the drive element (4).

## Revendications

1. Dispositif (1) pour modifier la position annulaire relative d'un arbre à cames (2) par rapport à un vilebrequin d'un moteur à combustion interne, le dispositif (1) comprenant un élément d'entraînement (4) entraîné par le vilebrequin au moyen d'une roue dentée (3), lequel élément d'entraînement est monté à rotation par rapport à l'arbre à cames (2), au moins deux chambres hydrauliques étant réalisées entre l'élément d'entraînement (4) et l'arbre à cames (2), lesquelles peuvent être sollicitées par un fluide sous pression, afin d'ajuster une position de rotation relative définie entre l'élément d'entraînement (4) et l'arbre à cames (2), **caractérisé en ce que** le support axial de l'arbre à cames (2) sur la culasse est réalisée par un côté frontal de la roue dentée (3) réalisée sous forme de pignon droit à denture extérieure.

2. Dispositif selon la revendication 1, **caractérisé en ce que** l'élément d'entraînement (4) présente au moins un couvercle (7) disposé du côté frontal, la roue dentée (3) étant axialement adjacente au couvercle (7) et étant connectée par engagement par correspondance géométrique ou par liaison de matière à celui-ci.

3. Dispositif selon la revendication 2, **caractérisé en ce qu'**une liaison à clavettes multiples (8) ou une liaison à dentures multiples est réalisée entre le couvercle (7) et la roue dentée (3).

4. Dispositif selon la revendication 3, **caractérisé en ce que** la liaison à clavettes multiples (8) présente un certain nombre de clavettes (9) ou de dents s'étendant radialement vers l'extérieur, qui sont disposées sur la roue dentée (3) et qui s'étendent dans des évidements correspondants dans le couvercle (7).

5. Dispositif selon la revendication 4, **caractérisé en ce que** la liaison à clavettes multiples (8) présente une fixation axiale entre la roue dentée (3) et le couvercle (7) sous la forme d'au moins une déformation plastique, qui est réalisée dans les clavettes (9) ou les dents et/ou dans les évidements.

6. Dispositif selon la revendication 2, **caractérisé en ce que** la roue dentée (3) et le couvercle (7) sont connectés par engagement par correspondance géométrique l'un à l'autre au moyen d'un jonc (10).

7. Dispositif selon la revendication 2, **caractérisé en ce que** la roue dentée (3) et le couvercle (7) sont connectés par engagement par correspondance géométrique l'un à l'autre au moyen d'une portion rabattue (11) de la roue dentée (3).

8. Dispositif selon la revendication 2, **caractérisé en ce que** le couvercle (7) est connecté au moyen d'une connexion vissée (12) à l'élément d'entraînement (4).

9. Dispositif selon la revendication 1, **caractérisé en ce que** la roue dentée (3) présente un corps de base cylindrique creux.

10. Dispositif selon la revendication 9, **caractérisé en ce que** des portions (13, 14) cylindriques creuses de diamètre réduit sont adjacentes au corps de base cylindrique creux et ce axialement des deux côtés.

11. Dispositif selon la revendication 10, **caractérisé en ce que** la portion (13) cylindrique creuse tournée vers un couvercle (7) présente une gorge tournée en forme de rainure annulaire (15) dans sa face frontale.

12. Dispositif selon la revendication 1, **caractérisé en ce que** le diamètre extérieur de la roue dentée (3) est inférieur au diamètre extérieur de l'élément d'entraînement (4).
